(19) Europäisches Patentamt
European Patent Office
Office européen des brevets

(11) Publication number: **0 088 510**
**B1**

(12) **EUROPEAN PATENT SPECIFICATION**

(45) Date of publication of patent specification: **09.03.88**

(21) Application number: **83300474.0**

(22) Date of filing: **28.01.83**

(51) Int. Cl.⁴: **C 08 L 45/00**, C 08 F 32/08, C 09 J 3/00, C 07 C 69/00, C 08 F 232/08, C 08 G 65/26, C 08 G 63/00, C 08 G 69/44, C 08 G 18/67

(54) **Improvement in or relating to petroleum resins.**

(30) Priority: **15.02.82 GB 8204373**

(43) Date of publication of application:
**14.09.83 Bulletin 83/37**

(45) Publication of the grant of the patent:
**09.03.88 Bulletin 88/10**

(84) Designated Contracting States:
**AT BE CH DE FR GB IT LI LU NL SE**

(56) References cited:
**EP-A-0 005 010**
**EP-A-0 039 787**
**DE-A-3 100 258**
**DE-A-3 107 450**
**FR-A-2 120 965**
**FR-A-2 203 864**
**FR-A-2 235 181**
**FR-A-2 250 767**
**GB-A-1 446 080**
**GB-A-2 055 389**

**CHEMICAL ABSTRACTS, vol. 90, no. 4, January 1979, page 81, abstract 24857u, Columbus, Ohio, US**

(73) Proprietor: **Exxon Research and Engineering Company**
**P.O.Box 390 180 Park Avenue**
**Florham Park New Jersey 07932 (US)**

(72) Inventor: **Lepert, Andre**
**Avenue des Mouettes 21**
**B-1640 Rhode Saint Genese (BE)**

(74) Representative: **Bawden, Peter Charles et al**
**ESSO CHEMICAL LIMITED**
**Esso Chemical Research Centre PO Box 1**
**Abingdon Oxfordshire OX13 6BB (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 088 510 B1

**Description**

The present invention relates to improvements in polar synthetic petroleum resins, to the improved resins so obtained and their uses. In particular the invention relates to improvements in the production of resins from oligomers of cyclopentadiene especially the production of synthetic rosin and rosin ester substitutes.

Cyclopentadiene and alkyl derivatives thereof such as methylcyclopentadiene or codimers with $C_5$—$C_6$ conjugated dienes are obtained as byproducts of oil refining. It has been known for many years that cyclopentadiene may be polymerised thermally or catalytically to produce resins which have found widespread use in adhesive formulations; pressure sensitive, hot melt, emulsion type, or ink resins, in road marking formulations and in many other applications. It is also well known that cyclopentadiene may be dimerised and the dicyclopentadiene then polymerised, again thermally or catalytically to produce resins.

There have also been many proposals to modify such petroleum resins to produce more reactive polar compounds which are useful in ink resins and water based system. It has also been proposed to hydrogenate the resins to improve colour and to incorporate other unsaturated monomers with the cyclopentadiene that is polymerised to control the molecular weight distribution of the polymer according to the proposed use of the resin.

Recently there have been many proposals to modify certain oligomers of cyclopentadiene to render them polar and more useful in adhesive formulations where the improved compatibility with rubbers and ethylene/unsaturated ester copolymers that is allegedly achieved will be highly beneficial. United States Patent 3,884,970 for example relates to the carboxylation of tricyclopentadiene with carbon monoxide to produce synthetic materials of structure similar to natural rosin ester. The tricyclopentadiene may be obtained by heating cyclopentadiene or dicyclopentadiene at 200°C. The carboxylated resin based on at least 80% tricyclopentadiene has a narrow molecular weight distribution and is said to be useful in pressure sensitive adhesives and in hot melt adhesives as its glycerin ester.

JP—A—80 39,243; 81 10,514; 81 16,654; 81 32,523; and 81 34,717; US—A—4,148,767, 4224430 and 4246367 and EP—A—0020945 relate to hardenable polyester resins obtained by reacting dicyclopentadiene with an α,β unsaturated carboxylic acids such as maleic acid and then reacting with a polyhydric alcohol. European Patent Application 003012 relates to dicyclopentadiene acrylates made from mixtures of cyclopentadiene containing from 60 to 95 wt.% of dicyclopentadiene. DE—A—2950703 carboxylates dicyclopentadiene with an α,β unsaturated dicarboxylic acid to give improved compatibility with ethylene/vinyl acetate copolymers for use in hot melt adhesives. GB—A—1,446,080, and 1450994, and BE—A—820,127 suggest reacting a mixture of cyclopentadiene oligomers or resins with an α,β unsaturated acid and then reacting with a monohydric alcohol to provide a polar resin useful in inks. All the Examples use mixtures of cyclopentadiene oligomers containing high concentrations of dicyclopentadiene or resins based on dicyclopentadiene which are of too high molecular weight to provide the required tackifying properties and compatibility with elastomers and ethylene/vinyl acetate copolymers to be useful in adhesive formulations.

We have now found that by the use of certain proportions of the oligomers of cyclopentadiene in a mixture that is reacted with an α,β unsaturated acid, polar resins are obtained which may optionally be further reacted to give resins useful in a wide variety of applications. The resins have increased softening point combined with narrow molecular weight distribution leading to improved compatibility with rubbers and copolymers of ethylene and unsaturated esters especially ethylene and vinyl acetate for use in both pressure sensitive and hot melt adhesive formulations.

The present invention therefore provides a process for the production of polar petroleum resins comprising reacting a cyclopentadiene oligomer mixture containing

(i) from 10% to 90% by weight of tricyclopentadiene
(ii) from 90% to 10% by weight of tetracyclopentadiene
(iii) from 0% to 50% by weight of pentacyclopentadiene

and less than 20% by weight of dicyclopentadiene with a carboxylic acid or anhydride, the percentages being of the total cyclodiene content in the mixture.

The preferred ratio of the cyclopentadiene oligomers will depend upon the use to which the polar petroleum resin whether further reacted or not is to be put. The term cyclopentadiene includes alkylcyclopentadienes such as methyl cyclopentadiene which may replace some or all of the unsubstituted cyclopentadiene, similarly codimers of cyclopentadiene with other $C_4$, $C_5$ or $C_6$ diolefines such as butadiene, isoprene or pentadiene may be used although we prefer that the mixture contain from 10 to 90 wt.% more preferably from 30 to 70 wt.% of tricyclopentadiene and from 10 to 90 wt.%, more preferably from 30 to 70 wt.% of tetracyclopentadiene. The pentacyclopentadiene content is less than 50 wt.% and, especially for use in adhesives, it is preferred that it be less than 30 wt.% which results in improved compatibility with ethylene vinyl acetate copolymers. The mixture of oligomers may be obtained by heating cyclopentadiene and/or dicyclopentadiene the alkyl derivatives thereof or codimers described above under carefully controlled conditions. The relative proportions of tricyclopentadiene and tetracyclopentadiene that are obtained depend upon the temperature, the duration of the heating and whether or not a solvent is used. For example although US—A—3884970 states that tricyclopentadiene may be obtained by heating cyclopentadiene or dicyclopentadiene at 200°C we find that mixtures

predominantly of tricyclopentadiene and tetracyclopentadiene may be obtained by heating cyclopentadiene or dicyclopentadiene for a certain length of time at between 170 to 300°C preferably 180°C and 220°C. For example we have found that if cyclopentadiene is heated for 4 hours under the following different conditions the following mixtures are obtained. The mixture of oligomers generally has a number average molecular weight as measured by Gas Chromatography of from 150 to 300 preferably from 190 to 250.

| Temperature °C | Time Hr. | Solvent wt% | Dicylo-Pentadiene wt% | Tricylo-Pentadiene wt% | Tetracyclo-Pentadiene wt% | Pentacyclo-Pentadiene wt% |
|---|---|---|---|---|---|---|
| 180 | 4 | None | 82 | 18 | — | — |
| 200 | 4 | None | 34 | 56 | 7 | 3 |
| 220 | 4 | None | 1 | 52 | 35 | 12 |
| 180 | 4 | Xylene (50) | 64 | 29 | 7 | — |
| 180 | 6 | " | 47 | 38 | 12 | 3 |
| 195 | 2 | " | 46 | 43 | 11 | — |
| 195 | 4 | " | 22 | 46 | 22 | 10 |
| 215 | 1 | " | 33 | 48 | 19 | — |
| 215 | 4 | " | 12 | 38 | 25 | 25 |
| 225 | 4 | " | 5 | 40 | 25 | 30 |

The mixture that is reacted with the carboxylic acid in the process of the present invention may contain higher oligomers of cyclopentadiene such as hexacyclopentadiene although the quantity of these higher oligomers should not be above 30% based on the total cyclodiene content of the mixture.

The carboxylic acid that is reacted with the mixturesof cyclopentadiene oligomers may be an acid or an anhydride and is preferably an α,β unsaturated acid such as maleic acid which may be obtained from a mixture of maleic anhydride and water. Non limitative examples of unsaturated acids that may be used include $C_3$—$C_{30}$ acids such as acrylic acid, methacrylic acid, tetrahydrophthalic acid, bicylo (2,2,1) hept-5-ene-2,3 dicarboxylic acid, endomethylene tetrahydro-phthalic acid, fumaric acid, crotonic, citracanoic, itaconic, aconitic, mesaconic acids, phthalic acids (ortho, meta and para), fatty acids and mixtures of these acids may be used.

Since the unsaturated acids are fairly reactive, catalysts such as Friedel Crafts Catalyst (e.g. $BF_3$ or $BF_3$ organic complexes), Lewis acids (e.g. sulfuric acid, para toluene sulfonic acid, sulfonic polystyrenes, fluoro sulfonic acid) and the like are not necessary although they may be used.

Saturated $C_1$ to $C_{30}$ mono-, di-, or polycarboxylic acids such as oxalic, succinic, adipic, malic, malonic acids, hexahydrophthalic acid, methyl hexahydrophthalic acid, azelaic acid, sebacic acid, pyromellitic, trimellitic, and citric acid might be also used but they exhibit a slower reactivity than α,β unsaturated acids and catalysts as well as higher condensation temperature are required for the reaction. Furthermore, degradation in resin colour can result and so the α,β unsaturated acids are preferred. Blends of α,β unsaturated carboxylic acids and saturated carboxylic acids may also be used.

The acids could be linear, branched, aliphatic, alicyclic, aromatics, and can contain halogen or any other polar group such as hydroxyl, amino, nitro, ether, or the like. Although $C_1$ to $C_{30}$ acids are preferred high molecular weight acids such as the alkyl succinic acids or anhydrides may be used.

The α,β unsaturated carboxylic acid may be reacted in any of the well known ways and our preferred method is to combine a solution of the cyclopentadiene oligomers with the acid at the melting temperature of the acid. Reaction is fairly rapid (generally less than one hour) and is generally exothermic.

The reaction of the acid with cyclopentadiene nucleus generally proceeds as follows

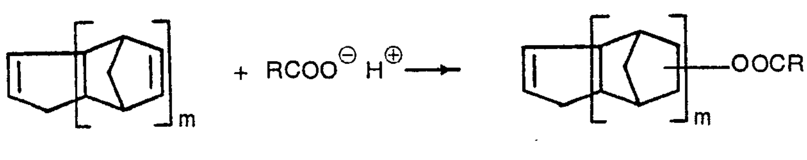

and when a dicarboxylic acid is used a half ester is obtained as follows

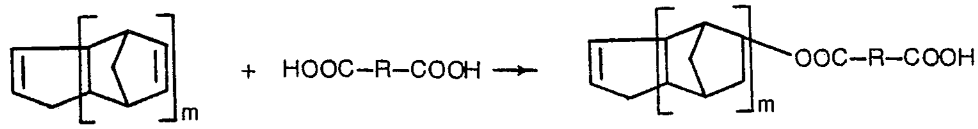

which frequently have an acid number varying from 25 to 250 (mgKOH per gram of product) depending upon the ratio of acid to cyclopentadiene unit. The free carboxylic acid group on the half ester provides a reactive site for a large variety of subsequent reactions yielding a wide range of products.

The molar ratio of carboxylic acid to cyclopentadiene units in the mixture that should be used depends upon the use to which the modified resin is to be put and on any subsequent reactions that are envisaged. As a general guide we prefer to react between 0.2 and 2.0 preferably 0.5 and 1.2 mole of acid per mole of cyclopentadiene in the mixture. For subsequent esterification for use in adhesive formulations we prefer for cost reasons to react with maleic acid at around 130°C. The duration of the reaction must also be controlled because we find that the longer the reaction time the greater the proportion of the diester that is formed and although the diester increases the softening point its presence is bad for compatibility with ethylene/vinyl acetate copolymers so impairing its use in hot melt adhesives. The reaction time is preferably controlled to give the optimum proportion of the half ester and the diester. Optimum conditions for other outlets depend upon the melting point of the selected acid and its reaction rate.

When maleic acid is selected it can be used as pure form or prepared in situ at 50 to 70°C by reacting maleic anhydride and water.

The carboxyl modified resins thus obtained, especially the half esters are reactive and may be further reacted to provide resins suitable for use in a wide variety of applications such as inks, adhesives, rosin ester substitutes, alkyds, hardenable polyester obtained by condensation of polymerisative auto-oxidizable compositions, curable products, etc. In particular the resin may be esterified by reaction with a mono- or polyhydric alcohol.

Similarly if the modified resin has been produced by the Diels-Alder condensation of an α,β unsaturated dicarboxylic acid with the mixture of cyclopentadiene oligomers one or both of the free carboxylic acid groups may be esterified hereagain offering a wide variety of possible reactions and products. For example a free acid function may be reacted with a polyol and anhydrides to produce polyesters, bases (e.g. caustic, potassium hydroxide and ammonia...) to produce water soluble salts, metal oxides or hydroxides (e.g. MgO), amines or diamines, urea to produce polyamides, acrylic or methacrylic acids to produce corresponding acrylates and methacrylates (see US—A—4,071,489; 4,097,677), polyol and organic isocyanates to produce polyurethanes, epoxides to produce polyethers.

The molecular weight of the ester so obtained may be increased by heating or other polymerisation mechanisms such as free radical, catalytic, U.V., electron beam or gamma radiation polymerisation. The increase in molecular weight depends upon the time and temperature of heating and we have found that the softening point is dependent on the length of heating. We prefer to heat between 150° to 300°C preferably 180°C—260°C for 0.5 to 10 hours preferably 0.5 to 2 hours depending on the molecular weight desired. Temperature and time may be reduced by using catalysts.

These reactions are not limitative and might involve any other chemical reaction feasible with the preformed acid and/or alcohol function. The molecular weight of the reactants may be controlled according to the proposed use of the final product.

When monoalcohols or polyhydric alcohols are used they may be any $C_1$ to $C_{30}$ preferably $C_4$ to $C_{18}$ saturated, unsaturated, aliphatic, aromatic, mixed aliphatic/aromatic alcohol having linear or branched chain structure. Examples of suitable polyols are diols such as glycols as well as ether glycols such as ethylene glycol, propylene glycol, neopentyl glycol, 1,3 butylene glycol, 1,6 hexanediol, diethylene glycol, dipropylene glycol. Other conventional polyols might be for example glycerol, pentaerythritol, sorbitol and the like.

Monoalcohols are preferred for obtaining the optimum molecular weight and properties balance for resin useful in adhesive formulation, particularly pressure sensitive adhesives and hot melt adhesives where the resins act as tackifiers in mixture with elastomers or ethylene vinyl acetate copolymers. We have found that the choice of the physical properties of the resin depend upon the choice of the alcohol; long chain aliphatic alcohols (saturated, unsaturated, linear, branched, aliphatic or aromatic) are preferred when liquid or viscous resins are required whereas cyclic alcohols such as cyclohexanol, benzyl alcohol and dicyclopentadiene alcohol are preferred for producing solid polar resins.

In adhesive formulations it is important that the resin have as high a softening point as possible consistent with the desired tackifying properties and that it also be compatible with the natural and/or synthetic rubber with or without the need for a solvent as the case may be. It has been found that resins according to the present invention have such a particularly desirable combination of properties.

In the production of resins for adhesives we prefer to react the mixture of cyclopentadiene oligomers with from 0.2 to 2.0 preferably from 0.5 to 1.2 moles of α,β unsaturated acid per mole of cyclopentadiene in the mixture. We than prefer to react the product of this reaction with from 0.2 to 3.0 preferably 0.6 to 1.5

moles of an alcohol. We prefer to use a cyclic alcohol such as cyclohexanol or dicyclopentadienyl alcohol since these have a good combination of tackifying and compatibility for use in adhesives.

The resins prepared by the process of this invention as such or after hydrogenation (double bond stabilisation) may have a wide range of end uses and applications. They can be applied on paper, metal, thermoplastic, PVC, woven and non woven fabrics, glass, etc. as protective coatings or for bonding such materials together.

Typical applications are hot melts, carpet backing, coatings with drying oil formulation, paints, book binding, road marking, products assembly (e.g. wood working), printing inks, paper sizing or any applications involving natural or synthetic resins and/or rubbers such as caulks, sealants or rubber tackification.

More especially their use as elastomer tackifiers should be employed with natural rubber or synthetic rubbers (polyisoprene, EPDM, butyl, chlorobutyl, bromobutyl, neoprene, SBR and thermoplastic block copolymers for example SIS styrene/isoprene/styrene rubber (e.g. Shell Cariflex TR 1107), SBS styrene/butadiene/styrene (e.g. Shell Cariflex TR 1102), saturated styrene/olefins/styrene (e.g. Shell Kraton G) or the like and their mixture. These resins provide outstanding tackiness with such elastomers at variable resin/rubber ratios.

Other applications involving such resins are pressure sensitive adhesives, hot melt adhesives, hot melt pressure sensitive adhesives, label adhesives, contact adhesives, low temperature adhesives, latex adhesives, surgical tapes and masking tapes. They can be applied in solvent or in emulsion form (water based adhesives). The resins are compatible with acrylics and can be applied in blends.

Since these resins are compatible with ethylene vinyl acetate copolymers (EVA) they may be used in hot melt adhesives as well as hot melt pressure sensitive adhesives (HMPSA) which are EVA based. In pressure sensitive adhesive formulations 30 to 200 parts by weight of the resin of the present invention may be used per 100 parts of the rubber, preferably 40 to 120 parts; if necessary oils may also be added. Similar proportions are preferably used in hot melt adhesives where the second component is generally an ethylene/vinyl acetate copolymer.

Latex adhesives and emulsion adhesives can be prepared by emulsifying in water the thermoplastic rubber with or without oil in the presence of a diluted solution of a soap such as rosin salt or by adding a conventional emulsifier. Another way to prepare the emulsion is to form "in situ" the necessary salt by adjusting the acid number of those ester resins and reacting them with caustic, potassium hydroxide, ammonia, amines or the like. New carboxylated rubbers existing on the market can be also used for preparing emulsions containing these resins. The emulsion may also be prepared in situ by polymerising the ester resin in water in the presence of catalysts such as potassium persulphate or other Redox catalysts. The ester may also be copolymerised by this process in the presence of vinyl unsaturated monomers such as vinyl acetate, styrene and alkyl styrenes, α-olefines, acrylic and methacrylic acid, acrylates and methacrylates, vinyl chloride maleates and fumarates, acrylamide, acrylonitrile etc.

The resin may also be used in hot melt roadmarking formulations where they are mixed with a pigment such as titanium dioxide. Typically a formulation contains from 25 to 300 parts by weight of pigment for each part of the resin and preferably the pigment is powdered titanium dioxide. The resin may be the ester or half ester and where a half ester is used it may first be modified to the monovalent (potassium, sodium or ammonium) or polyvalent (magnesium, calcium, zinc or aluminium) salt.

The present invention is illustrated but in no way limited by reference to the following Examples.

Example 1

Various cyclopentadiene concentrates comprising 50 wt.% solutions in xylene were reacted for 2 hours at 120—130°C with an equimolar amount of maleic acid. After xylene recovery by vacuum distillation light coloured half esters having the softening point given in the following table were obtained. A concentrate of a 50 wt.% solution of pure dicylopentadiene was similarly treated for the sake of comparison.

| | Poly CPD Distribution (Wt.%) | | | |
|---|---|---|---|---|
| DCPD | 100 | 10 | 19 | 4 |
| CPD Trimer | — | 52 | 34 | 40 |
| CPD Tetramer | — | 24 | 21 | 25 |
| CPD Pentamer | — | 14 | 26 | 31 |
| | Half-ester Properties | | | |
| Softening Point* | liquid | 44—60 | 127 | 120 |
| Gardner Colour** | 1 | 1 | 2 | 2 |
| Acid Number*** | 245 | 159—177 | 180 | |

(*) ASTM D—E.28
(**) 50 wt.% in toluene
(***) mg KOH per gram of product.

Maleic acid can be replaced by maleic anhydride (1 mole) and water (1.2 mole) at 50—70°C.

Example 2

A 50 wt.% solution in Xylene of the following mixture of cyclopentadiene oligomers.

| Poly CPD distribution (wt.%) | |
|---|---|
| DCPD | 18 |
| CPD Trimer | 43 |
| CPD Tetramer | 23 |
| CPD Pentamer | 16 |

was reacted for 2 hours at 120—130°C with equimolar amounts of maleic acid as in Example 1.

The half ester so obtained was then heated at 170°C for certain periods of time to give products with the following properties.

| Half Ester Properties | | | | | |
|---|---|---|---|---|---|
| Hours heating | 1 | 2 | 3 | 4 | 5 |
| Softening Point* | 85 | 102 | 108 | 115 | 125 |
| Acid number** | 163 | 147 | 143 | 140 | 137 |

* ASTM D—E.28
** mg KoH per gram of product.

Example 3

This example illustrates the influence of alcohol nature upon resin softening point, compatibility with ethylene vinyl acetate copolymer of different vinyl acetate content and pressure sensitive adhesive properties. DCPD or polyCPD was reacted with equimolar amounts of maleic acid as described in Example 1 and the half ester then reacted with 1.5 mole of alcohol (n-decanol, 2 ethyl hexanol, cyclohexanol or DCPD alcohol).

The esterification has been carried out at atmospheric pressure, the water being removed by azeotropic distillation with the xylene solvent. The ester produced had an acid number of 20 (value corrected due to presence of solvent and alcohol excess). Solvent and alcohol in excess were eliminated by vacuum distillation and the final unsaturated ester stabilised by adding 0.5 wt.% phenolic antioxidant (Ciba Geigy Irganox (Registered Trade Mark) 1076).

Table 1 compares the esters obtained using cyclohexanol or dicyclopentadiene alcohol with other linear alcohols such as decanol or 2-ethyl hexanol.

TABLE 1

| | 1 | 2 | 3 | 4 | 5 | 6 | 7 | 8 | 9 | 10 |
|---|---|---|---|---|---|---|---|---|---|---|
| **CPD Distribution (wt.%)** | | | | | | | | | | |
| DCPD | 100 | 21 | — | 11 | 4 | 100 | 11 | 11 | 11 | 11 |
| Tri CPD | — | 63 | 71 | 52 | 40 | — | 52 | 43 | 52 | 52 |
| Tetra CPD | — | 16 | 28 | 24 | 25 | — | 24 | 27 | 24 | 24 |
| Penta CPD | — | — | 1 | 13 | 31 | — | 13 | 19 | 13 | 13 |
| **Esterifying alcohol** | | | | | | | | | | |
| Decanol | — | — | — | — | — | — | — | — | X | — |
| 2-ethyl hexanol | — | — | — | — | — | — | — | — | — | X |
| Cyclohexanol | X | X | X | X | X | X | — | — | — | — |
| Dicyclopentadiene alcohol | — | — | — | — | — | — | X | X | — | — |
| **Resin properties** | | | | | | | | | | |
| Softening point °C(1) | liquid | 39 | 48 | 55 | 73 | 46 | 70 | 95 | liquid | liquid |
| Gardner colour(2) | | 2 | 2 | 1.5 | 2 | 2 | 2 | 1.5 | | |
| Solubility (toluene/Exsol*(3) | | +/+ | +/+ | +/LS | +/LS | +/+ | +/LS | +/LS | | |
| **Application Properties** | | | | | | | | | | |
| Wax cloud point °C(4) EVA 220/resin/microwax 30/45/25 wt.% | | | 88 | 86 | | 83 | 195 | 230 | | |
| **EVA compatibility(5)** | | | | | | | | | | |
| Vinyl Acetate Content 19% VA | | I | C/H | C/H | H | H | H | H | | |
| 28 | | C | C | C | H | H | H | H | | |
| 40 | | C | C | C | H | C | C | H | | |
| 50 | | C | C | C | H | C | C/H | H | | |

Footnotes for Table 1:

(1) ASTM D—E28.
(2) Gardner colour at 50 wt.% resin concentration in toluene.
(3) Solubility at 50 wt.% resin in solvent (either Toluene or Exsol).
Exsol D40 = ESSO dearomatised white spirit — boiling range 155—200°C.
+ = complete solubility.
LS = limited solubility.
(4) Temperature recorded in Celsius Degree at which 10g of a clear molten blend of EVA 220/resin/microwax (melting point 76°C) 3g/4.5g/2.5g becomes cloudy during cooling.
— EVA 220 is a Dupont ethylene vinyl acetate containing 28 wt.% vinyl acetate and having a melt index according to ASTM D-1238 of 125—175.
(5) Check by visual appearance of a blend of resin and an ethylene vinyl acetate copolymer (EVA).
— Blend consists of 3g resin and 3g EVA — Temperature 180, 100 and 20°C.
I = incompatible.
H = Hazy.
C = compatible (clear).
* "EXSOL" is a Registered Trade Mark.

Example 4

Pressure Sensitive Adhesives

To assess pressure sensitive adhesive properties a sample of natural rubber of adequate Mooney viscosity, a petroleum resin produced according to the present invention and an antioxidant were dissolved in n-heptanetoluene (90:10 wt.%). The pressure sensitive adhesive film used for tack measurement was prepared by evaporating overnight at room temperature a thin layer of the rubber/resin solution spread on a cellophane or a polyester film. The adhesive mass was 30 g/m$^2$.

The pressure sensitive adhesive properties measured are those set out in the "Test Methods for Pressure Sensitive Tapes" as developed by the Specifications and Technical Committee of the Pressure Sensitive Tape Council 5th Edition and more specifically:

180° Peel strength (PSTC-1)
90° Peel strength (PSTC-2)
Tack Rolling Ball (PSTC-6)
Shear adhesion (PSTC-7)
Quick stick (PSTC-5)
Polyken (Registered Trade Mark) Tack As measured on Polyken Tack Testing TMI-Testing Machine Inc Amityville New York.

The adhesive formulations were either based on natural rubber (NR) (65 Mooney viscosity) or random styrene butadiene rubber SBR 1011 which was applied from a 15 wt.% toluene solution. In either instance the resin content was 100 phr (100 resin parts for one hundred parts of rubber).

In Table 2 the pressure sensitive adhesive properties formulations containing the polar resin described in Table 1 are compared with those of commercial natural rosin esters currently on the market whose properties are as follows:

| Trade Name | Product | Softening point °C |
|---|---|---|
| FORAL* 85 | Glycerol ester of rosin | 81 |
| FORAL* 105 | Pentaerythritol ester of rosin | 103 |
| Staybelite* ester 10 | Hydrogenated glycerol ester of rosin | 84 |
| Pentalyn* H | Hydrogenated pentaerythritol ester of rosin | 104 |

* Registered Trade Mark.

TABLE 2
Pressure sensitive adhesive properties

| Resin sample (from Table 1) | | | | | 1 | 2 | 3 | 4 | 5 | 6 | 7 | 8 |
|---|---|---|---|---|---|---|---|---|---|---|---|---|
| Competitive Resins | | | | | | | | | | | | |
| Foral® 85 | X | — | — | — | | | | | | | | |
| Foral® 105 | — | X | — | — | | | | | | | | |
| Staybelite® ester 10 | — | — | X | — | | | | | | | | |
| Pentalyn® H | — | — | — | X | | | | | | | | |
| NR | | | | | | | | | | | | |
| 180°C Peel strength (grams/cm) | 340 | 440 | 320 | 430 | 125 | — | 280 | 345 | 180 | 300 | 250 | 180 |
| Polyken tack (grams) | 660 | 990 | 680 | 550 | 450 | — | 440 | 600 | 100 | 220 | 440 | 50 |
| Rolling ball tack (cm) | 1.5 | 2.5 | 2.5 | 2.5 | 2 | — | 11 | 3 | >30 | 10 | 3.5 | >30 |
| Shear adhesion (hr) | 19 | 22 | 16 | 14 | 0 | — | 4 | 25 | 4 | 14 | 11 | 35 |
| SBR 1011 | | | | | | | | | | | | |
| 180°C Peel strength (grams/cm) | 1075 | 1085 | 820 | 1200 | 1030 | 2250 | 2650 | 2830 | 805 | 2910 | 1075 | 635 |
| Polyken tack (grams) | 880 | 990 | 550 | 880 | 600 | 800 | 880 | 900 | 1100 | 990 | 680 | 700 |
| Rolling ball tack (cm) | 1.5 | 6.5 | >30 | 7.5 | 2 | 2 | 2.5 | 1.5 | 3.5 | 2 | 2 | 12 |
| Shear adhesion (hr) | 16 | 16 | 19 | 20 | 0.2 | 1 | 2 | 2 | 4 | 22 | 20 | 5 |

Example 5

Similar pressure sensitive adhesive formulation to those of Example 4 were prepared but with a synthetic thermoplastic block styrene-isoprene-styrene rubber (Cariflex or KRATON (Registered Trade Mark) TR1102) having a styrene content as measured by Nuclear Magnetic Resonance (N.M.R.) of 29 wt.%).

The adhesive formulation contained 60% hexane/toluene solvent (80/20 wt.%), 15% KRATON TR1102, 22% resin and 3 wt.% ESSO FLEXON® oil and had the following properties:

| Resin sample (from Table 1) | 4 | 5 | 7 |
|---|---|---|---|
| 90° Peel strength (grams/cm) | 360 | 220 | 260 |
| Polyken tack (grams) | 640 | 400 | 200 |
| Rolling ball tack (cm) | 3 | $20^+$ | $20^+$ |
| Quick stick (grams/2.5 cm) | 1100 | 450 | 100 |
| Shear (hr) | $250^+$ | $250^+$ | $250^+$ |

Example 6

Label Adhesives

A label adhesive formulation based on a 15 wt.% toluene solution of a random styrene butadiene rubber (SBR 1011) and these polar resins was evaluated. The resin ratio 80 parts resin for 100 part rubber.

| Resin sample (from Table 1) | 4 | 5 | 7 | Pentalyn® H |
|---|---|---|---|---|
| 90° Peel strength (grams/cm) | 460 | 400 | 460 | 500 |
| Polyken tack (grams) | 660 | 700 | 820 | 740 |
| Rolling Ball tack (cm) | 2 | 3 | 2 | 5 |
| Quick stick (grams/2.5 cm) | 900 | 800 | 950 | 1100 |
| Shear (hr) | 3 | 5 | 4 | 7 |

Example 7

Hot Melt Adhesive Properties Evaluation

A hot melt adhesive formulation based on an ethylene vinyl acetate copolymer containing 28 wt.% vinyl acetate and having a Melt Index of 25 as measured by ASTM D-1238 (ESSO Escorene® UL 02528) was prepared.

The formulation is:

| | |
|---|---|
| Escorene (Registered Trade Mark) UL 02528 | 45 wt.% |
| Polar Resin | 45 wt.% |
| Paraffin Wax (melting point 65°C) | 10 wt.% |
| Antioxidant (Ciba Geigy Irganox® 1076) | 0.5 wt.% |

and its physical and adhesive properties are as follows:

| Resin sample (from table 1) | 4 | 5 | 7 | Foral 85 |
|---|---|---|---|---|
| Viscosity at 180°C mPa.s | 14000 | 16200 | 16300 | 13200 |
| **Adhesive properties** | | | | |
| Max open time at 180°C (s)* | 8 | 13 | 12 | 13 |
| Min set time, related to max open time,** (s) | 2 | 1 | 1 | 1.5 |
| T Peel(1) speed 2 inch/min (50.8 mm/min) on aluminium (grams/cm) | 530 | 540 | 540 | 925 |
| on polyethylene (grams/cm) | 600 | 150 | 650 | 850 |
| **Mechanical properties** 2 in/min | | | | |
| Tensile strength(2) (gram/cm$^2$) | 462 | 565 | 560 | 567 |
| Elongation(2) (%) | 1080 | 910 | 850 | 800 |
| Cold flexibility °C*** | <−27 | −22 | −26 | −27 |

(1) T-Peel ASTM D-1876 method.
(2) Tensile strength and Elongation:— ASTM D-638 method.
* Time during which second substrate may be applied and a bond achieved.
** Time needed to achieve bond between two substrates coated with the adhesive formulation.
*** Temperature at which adhesive formulation becomes brittle.

## Example 8

1 mole of poly CPD containing essentially CPD trimer (71 wt.%), CPD tetramer (28 wt.%) and CPD pentamer (1 wt.%) was condensed with 1 mole of maleic acid and the product condensed with 1.5 mole of cyclohexanol as in Example 1. The product had a softening point of 48°C, a Gardner colour 2 and an acid number of 10.

This polar resin was completely soluble in toluene, EXSOL® and Acetone at 50 wt.% concentration. Slight haziness is however noticed with Exsol® or acetone solvent. It is also completely compatible with all the ethylene vinyl acetate copolymers described in Table 1.

The properties of a pressure sensitive adhesive containing this product and SBR 1011 rubber as used in Example 4 were

| | | |
|---|---|---|
| 180° Peel strength | (grams/cm) | 2650 |
| Polyken tack | (grams) | 850 |
| Rolling ball tack | (cm) | 1.5 |
| Shear | (hr) | 0.5 |

## Example 9

For comparison phthalic acid, maleic acid, and fumaric acid have been esterified with cyclohexanol and/or dicyclopentadiene alcohol in order to form the corresponding diesters and the properties of the resins obtained and those of adhesive containing them are shown in Table 3.

TABLE 3

| Acid (anhydride) | Maleic | | Fumaric | | Phthalic | | | | |
|---|---|---|---|---|---|---|---|---|---|
| None * | | | | | X | X | | | |
| Cyclohexanol | X | | X | | X | | X | X | |
| Cyclohexanol | X | | X | | | | X | | |
| DCPD alcohol | | X | | X | | X | | X | X |
| DCPD alcohol | | X | | X | | | | | X |
| *Resin Properties* | | | | | | | | | |
| Softening point (°C) | 45 | liquid | 45 | | | 130 | viscous liquid | | |
| Acid number (mgKOH/g) | 24 | 9 | 25 | 9 | 227 | 149 | | 43 | 20 |
| Solubility (toluene/ Exsol®/acetone) | +/LS/+ | +/+/+ | LS/LS/+ | | LS/I/LS | I/I/I | +/+/+ | +/LS/+ | +/+/+ |
| EVA compatability | | | | | | | | | |
| VA% 19 | C/H[1] | C/I[1] | I | C/I[1] | I | I | C | I | H |
| " 28 | C/H[1] | C | I | C/H[1] | I | C | C | C | H |
| " 40 | C | C | I | C | C | C | C | C | C |
| " 50 | C | C | I | C. | C | C | C | C | C |
| *Adhesive properties* | | | | | | | | | |
| SBR 1011 100 phr | | | | | | | | | |
| 180° Peel strength (grams/cm) | None[2] | 1375 | 800 | 1450 | | | | 1930 | 2300 |
| Polyken tack (grms) | " | 700 | 700 | 700 | | | | 550 | 700 |
| Rolling ball tack (cm) | " | 2 | 3 | 3 | | | | $30^+$ | 1.5 |
| Shear (hr) | " | $1^-$ | $1^-$ | $1^-$ | | | | 1 | $1^-$ |

[1] at 20°C
[2] adhesive film crystallisation
* Each "X" indicates in each column that one mole of the particular alcohol was used for one carboxyl group present in the acid.

Example 10

1 mole of poly CPD consisting of 56 wt.% CPD trimer, 31 wt.% CPD tetramer, 13 wt.% CPD pentamer was reacted with one mole phthalic acid at 150°C to form the half ester. An exothermic reaction results and temperature rapidly reaches 200°C at which it is held for 1 hour. The acid number of the half ester obtained was 117.

Further esterification is then performed by reaction for 2 hours at 160—170°C with 1.5 moles cyclohexanol. The ester obtained after excess recovery under vacuum at 60°C had an acid number 27.

Its pressure sensitive adhesive properties in an SBR 1011 formulation similar to that of Example 4 are

| | | |
|---|---|---|
| 180° Peel strength | (grams/cm) | 3200 |
| Polyken tack | (grams) | 1000 |
| Rolling ball tack | (cm) | 12 |
| Shear | (hr) | 3 |

Example 11

For comparison the half ester obtained from pure DCPD after condensation with an equimolar amount of maleic acid (130°—2 hr) was esterified with 0.5 mole glycerol until the residual acid number was 25. The physical properties of the half ester were

Softening point °C = 77
Gardner colour = 4.5

Compatibility with ethylene vinyl acetate copolymers as well as pressure sensitive adhesive properties based on natural rubber was poor.

Examples 12 to 14 illustrate that the unsaturated polar resin can be thermally (or catalytically) polymerised to upgrade the resin softening point and other properties according to needs.

Example 12

Maleic acid was reacted with an equimolar amount of the poly CPD as described in Example 1 for 2 hours at 130°C and esterification performed with cyclohexanol according to the procedure indicated in Example 3. The temperature was then rapidly increased to 250°C and maintained for 3 hrs, samples being removed after 1 and 2 hours.

The poly CPD composition used was:

| | | |
|---|---|---|
| DCPD | (wt.%) | 18 |
| CPD trimer | " | 43 |
| CPD tetramer | " | 23 |
| CPD pentamer | " | 16 |

| *Heating time at 250°C* | (Hr) | 0 | 1 | 2 | 3 |
|---|---|---|---|---|---|
| Softening point | (°C) | 52 | 67 | 85 | 100 |
| 180° Peel strength | (grams/cm) | 3015 | 760 | 685 | 580 |
| Polyken tack | (grams) | 770 | 1000 | 1080 | 330 |
| Rolling ball tack | (cm) | 3 | 3 | 3 | 8 |
| Shear | (hr) | 2 | 5.5 | 12.5 | 32 |

It may be seen that by heating shear cohesion is increased at the expense of 180° Peel strength.

Example 13

A poly CPD containing 34 wt.% DCPD, 45 wt.% CPD trimer, 12 wt.% CPD tetramer, 4 wt.% CPD pentamer the rest unidentified was esterified and thermally treated using the conditions shown in Example 12 except that the condensation time of maleic acid was 0.5 hr. As is shown in the following table all pressure sensitive adhesive properties based on SBR 1011 rubber are upgraded, especially the 180° Peel strength (> 3000 grams/cm).

| *Heating time at 250°* | | 0 | 1 | 2 | 3 |
|---|---|---|---|---|---|
| Softening point | (°C) | 35 | 57 | 75 | 90 |
| Gardner colour | | 1.5 | 5.5 | 6.5 | 7 |
| 180° Peel strength | (grams/cm) | 2290 | 3020 | 3375 | 3270 |
| Polyken tack | (grams) | 1000 | 1000 | 1000 | 300 |
| Rolling ball tack | (cm) | 1.5 | 2 | 1.5 | 14 |
| Shear | (hr) | 1 | 3 | 11 | 13 |

It may be seen that by reducing the amount of CPD pentamer and the maleic acid condensation time the shear is increased along with the peel strength.

Example 14

The process of Example 13 was applied to DCPD. In these conditions liquid plasticizers exhibiting surprisingly extremely high 180° Peel strength are obtained (SBR 1011 bases). Again cyclohexanol is the esterification alcohol.

| *Heating time at 250°C* | 0 | 1 | 2 | 3 | 4 | 5 |
|---|---|---|---|---|---|---|
| Softening point °C | liquid | liquid | viscous liquid | 53 | 70 | 80 |
| 180° Peel strength (grams/cm) | 1050 | 1490 | 1807 | 1830 | (dry films) | |
| Polyken tack (grams) | 650 | 700 | 900 | 450 | | |
| Rolling ball tack (cm) | 3 | 2.5 | 2.5 | 30+ | | |
| Shear (hr) | 0.3 | 0.5 | 2 | 7 | | |

Example 15

Example 13 was repeated with the cyclohexanol being replaced by 2-ethyl hexanol. Liquid products of increased viscosities are obtained. After 8 hours heating at 250°C the liquid plasticiser gave good SBR tackifying properties (SBR 1011 bases).

| | | |
|---|---|---|
| Gardner colour | | 8 |
| 180° Peel strength | (grams/cm) | 2170 |
| Polyken tack | (grams) | 600 |
| Rolling ball tack | (cm) | 12 |
| Shear | (hr) | 5 |

The produce is completely soluble in toluene, Exsol® and acetone.

Example 16

Example 13 was repeated except that the extent of the esterification with cyclohexanol has been changed in order to assess the effect of acid number upon physical properties. Heating was limited to 2 hours for pressure sensitive adhesive properties optimisation.

| | | | | |
|---|---|---|---|---|
| *Heating time at 250°C (hrs)* | | 2 | 2.30 | 2 |
| Softening point | (°C) | 75 | 83 | 77 |
| Acid number | (mg KOH/g) | 22 | | 36 |
| Gardner colour | | 6.5 | 7 | |
| 180° Peel strength | (grams/cm) | 3375 | 3500 | 2980 |
| Polyken tack | (grams) | 1000 | 990 | 990 |
| Rolling ball tack | (cm) | 1.5 | 7 | 3.5 |
| Shear | (hr) | 11 | 8 | 16 |

All the polar resins according to the present invention described in the above Examples are compatible in any proportion with current natural rosins, natural rosin esters, polyterpene resins as well as with hydrocarbons resins including aliphatic resins, mixed aliphatic/aromatic resins, aromatic resins, hydrogenated hydrocarbon resins. Typical examples are the petroleum resins manufactured and sold by ESSO as "Escorez" (Registered Trade Mark) 1102, 1202, 1304, 1310, 1401, 2101, 2203, 7105, 8000, 5000. This list is not limitative and is only given for example.

As is shown in the following Examples blending the resins is an efficient way to balance overall physical properties and performance in standard applications such as those described in this patent application.

Example 17

Sample No. 3 (softening point 48°C) described in table 1 (example 3) was blended at 50 wt.% concentration with different ESSO Escorez® resins 2101, 1401, 5300, 5320 and the properties of the blend are set out in Table 4.

## TABLE 4

Polar Resin/Hydrocarbon Resin Blends

| | | | | | Polar Resin/Hydrocarbon Resin Blend (50/50 wt.%) | | | | | |
|---|---|---|---|---|---|---|---|---|---|---|
| Polar Resin[1] | | X | | | | | X | X | X | X |
| Escorez® 2101 | | | X | | | | X | | | |
| Escorez® 5300 | | | | X | | | | X | | |
| Escorez® 5320 | | | | | X | | | | X | |
| Escorez® 1401 | | | | | | X | | | | X |
| *Resin properties* | | | | | | | | | | |
| Softening point °C | | 48 | 96 | 102 | 123 | 118 | 49 | 70 | 82 | 66 |
| Wax cloud point °C EVA 220/resin/wax 30/42/25 wt.% | | 88 | 86 | 93 | | 92 | 83 | 84 | | 87 |
| EVA compatibility | | | | | | | | | | |
| VA% 19 | | C/H | C | C | | C | C/H | C/H | C/H | C/H |
| 28 | | C | C | LC | | LC | C | C/H | C/H | H |
| 40 | | C | I | I | | I | C | I | I | I |
| 50 | | C | | I | | I | LC | I | I | I |
| *PSA properties:* SBR 1011 100 phr. | | | | | | | | | | |
| 180° Peel strength | (grams/cm) | 2650 | 1000 | 3300 | 515 | 760 | 1050 | 985 | 3200 | 2330 |
| Polyken tack | (grams) | 880 | 1080 | 400 | 900 | 900 | 900 | 900 | 900 | 600 |
| Rolling ball tack | (cm) | 2.5 | 2.5 | 2 | 4 | >30 | 4 | 3.5 | 3 | $30^+$ |
| Shear | (hr) | 2 | 5 | 8 | 7 | 15 | 3 | 3 | 6 | 3 |

[1] Sample 3 from Table 1 of Example 3

Example 18

The polar resin sample no. 3 described in Example 3 and Table I was blended (50/50 wt.%) with a commercial acrylic solution (Gelva (Registered Trade Mark) 1151 and Gelva 2286 manufactured by Monsanto). The two products are fully compatible and pressure sensitive adhesive properties measured by the PSTC Rolling Ball tack are excellent Ball tack 2 cm.

Example 19

Preparation of polyCPD acrylate and methacrylate

These (meth) acrylates of polyCPD have been prepared according to the method described in EP—A—0,003,012.

1.2 mole of acrylic acid (173 grams) or 1.2 mole of methacrylic acid (206 grams) were heated at 60°C in presence of 0.5 g Ciba Geigy phenolic antioxidant Irganox® 1076 and 0.6 wt.% or 4 grams $BF_3$/etherate catalyst.

1 mole of polyCPD of 178 average molecular weight and following composition has been progressively added to the unsaturated acid/catalyst solution. The reaction has been pursued 1 hour at 60°C.

| | |
|---|---|
| CompositionXylene Wt.% | 48 |
| DCPD | 24 |
| CPD Trimers | 20 |
| CPD Tetramers | 6 |
| CPD Pentamers | 2 |

Then the reaction medium was washed three times with 200 ml water and neutralised with an ammonia solution containing 4 wt.% $NH_3$.

After solvent recovery by vacuum distillation a brown viscous liquid has been obtained.

In both cases Infra Red spectra have shown the appropriate polyCPD acrylate and methacrylate structures.

Example 20

Preparation of polyCPD ethylene glycol ether

The method described in US—A—4,261,872 for preparing the dicyclopentadiene ethylene glycol ether has been applied to the polyCPD polymer described in Example 19.

4 moles of ethylene glycol (124 grams) have been combined with 0.5 grams Ciba Geigy Irganox® 1076 antioxidant and 7.2 grams $BF_3$/etherate catalyst and heated to 90°C.

To this glycol/catalyst blend 0.5 mole (170 grams) of the polyCPD solution used in Example 19 was added over three hours and the mixture then held at 90°C for 2 hours.

The reaction medium was then washed 2 times with 250 ml water and neutralised with an ammonia solution containing 4 wt.% ammonia.

The polyCPD ethylene glycol ether was recovered as a viscous semi-solid product by solvent elimination under vacuum.

Double bond stabilisation:

The polar resin of the present invention may be stabilised by hydrogenation of the residual reactive double bond. Alternatively any other conventional chemical reactions involving addition reactions to double bond (e.g. halogenation — see EP—A—0,026,295, or addition of sodium bisulfite) may be used.

Example 21

50 grams of polyCPD (sample of softening point 75°C described in Example 14) diluted with 50 grams xylene was hydrogenated at 100°C in presence of 5 wt.% of Raney nickel. The Raney nickel catalyst had been prepared according to the caustic washing procedure described in the Text-book of Practical Organic Chemistry by A. I. Vogel p.870 — Publisher Longmans — 3rd Edition.

The hydrogenated polar resin had been recovered after solvent recovery under vacuum.

Typical properties obtained at different hydrogenation conditions are herewith described. Nuclear Magnetic Resonance (N.M.R.) analysis confirms that hydrogenation occured (maleate/fumarate double bond disappearance).

No hydrogenation

| | | | | | | |
|---|---|---|---|---|---|---|
| Temperature (°C) | | | 50 | 100 | 150 |
| Pressure (bars) | | | 40 | 20 | 20 |
| Time (hr) | | | 2 | 2 | 2 |
| Softening point (°C) | | 75 | 70 | 71 | 69 |
| Gardner colour | | 10.5 | 10.5 | 10.5 | 10.5 |
| Wax cloud point (°C) | | $250^+$ | $250^+$ | $250^+$ | 205 |
| *PSA Properties SBR 1011—100 phr* | | | | | |
| 180° Peel Strength | (grams/cm) | 2600 | 1000 | 920 | 350 |
| Polyken tack | (grams) | 1500 | 660 | 440 | 750 |
| Ball tack | (cm) | 3 | 3.5 | 4 | 8 |
| Shear | (hour) | 8 | 14 | 13 | 8 |

Example 22

The polyCPD-cyclohexyl maleate ester of softening point 75°C described in examples 13 and 21 was hydrogenated with a commercial Harshaw reduced nickel catalysts containing about 50—53 wt.% nickel.

The hydrogen has been performed in xylene solvent at different ester concentration and different hydrogenation conditions.

| | Reference | 1 | 2 | 3 |
|---|---|---|---|---|
| Ester concentration (wt%) | | 20 | 20 | 50 |
| Catalyst concentration (wt.% on solution) | | 1.0 | 2.0 | 2.0 |
| Temperature (°C) | | 190 | 170 | 170 |
| Pressure (bars) | | 20 | 20 | 50 |
| Time (hr) | | 5 | 5 | 5 |
| Softening point (°C) | 75 | 74 | 89 | 75 |
| Gardner colour | 10.5 | 9.5 | 7 | $5^+$ |
| Wax cloud point (°C) | $>250^+$ | 170 | $>250^+$ | 140 |
| *PSA Properties — SBR 1011—100 phr* | | | | |
| 180° Peel strength (grams/cm) | 2600 | 1080 | 1380 | 300 |
| Polyken tack (grams) | 1500 | 550 | 1550 | 110 |
| Ball tack (cm) | 3 | 17.5 | 3 | 15 |
| Shear (hr) | 8 | 5 | 3 | 3.5 |

Example 23

Uncured polyCPD-cyclohexyl maleate of S.P. 51°C is copolymerised with vinyl or unsaturated monomers.

In these experiments the unsaturated polyCPD-cyclohexyl maleate ester is blended with variable concentrations of vinyl monomers and heated for 2 hours at 150°C under nitrogen blanketing.

| | | | | | | | | Foral 85 |
|---|---|---|---|---|---|---|---|---|
| PolyCPD-cyclohexyl maleate (uncured) | (mole) | 1 | 1 | 1 | 1 | 1 | 1 | |
| Styrene | (mole) | — | 1 | — | — | — | — | |
| Vinyl Toluene | (mole) | — | — | 1 | 0.5 | — | — | |
| Butyl methacrylate | (mole) | — | — | — | — | 1 | — | |
| Octene 1 | (mole) | — | — | — | — | — | 1 | |
| S.P. (°C) | | 51 | 95 | 110 | 75 | 70 | 118 | 85 |
| Gardner Colour | | 2 | 5– | 2 | 2.5 | 3+ | 4 | |
| Wax Cloud Point (°C) | | 75 | >250 | >250 | >250 | >250 | >250 | <75 |
| *PSA Properties — SBR 1011—100 phr* | | | | | | | | |
| 180° Peel strength | | 1725 | 1400 | 985 | 820 | 880 | 580 | 780 |
| Polyken Tack | | 800 | 350 | 100 | 1050 | 1020 | 480 | 1400 |
| Ball Tack | | 3.5 | 5.5 | >30 | 9.0 | 4 | 4.5 | 2.5 |
| Quick Stick | | 240 | 60 | | 385 | 510 | 310 | 480 |
| Shear | | 1.5 | 85 | 2 | 2 | 3.5 | 2 | 3.5 |

As shown copolymerising the ester with styrene improves the cohesion of the pressure sensitive adhesive formulation based on SBR—1011.

Good results have been also obtained with contact adhesive formulations based on a vinyl toluene polychloroprene standard formulation such as:

| | |
|---|---|
| Polychloroprene (Bayerprene (Registered Trade Mark) 321) | 100 parts |
| Magnesium oxide | 8 " |
| Zinc oxide | 4 " |
| Ester | 40 " |

Most outstanding properties are good solution stability (no phase separation), good compatibility with polychloroprene and good adhesion to polar substrates such as aluminium.

Example 24

A cured polyCPD-cyclohexyl maleate of 73°C softening point was blended with a 15 wt.% SBR 1011 toluene solution (ester/rubber ratio 100 phr) and the resulting pressure sensitive adhesive formulation applied on to a Dupont Mylar(R) polyester film. After drying 15 minutes at 80°C the film is then applied to different substrates according to the PSTC method described in Example 4.

The adhesion recorded in Newtons/cm is measured with the T-Peel method. (ASTM method D1876).

| Substrate | *PVC* | *Polypropylene* | *Polyester* | *Aluminium* |
|---|---|---|---|---|
| T-Peel | 12 | 13 | 11.5 | 15.5 |

Example 25

A liquid polyCPD-2 ethyl hexyl maleate ester produced as described in 10 of table 1 was polymerised in situ in aqueous solution in presence of potassium persulfate as catalyst. (Suspension or emulsion processes are feasible).

The polymerisation is performed by polymerising 100 g of ester with 100 grams water containing 0.5 grams potassium persulfate, 2 grams of sodium carbonate as pH controlling agent and 0.5 grams soluble starch. The ester is continuously fed to the water solution maintained at 85°C and the polymerisation is pursued 1 hour under stirring and nitrogen blanketing.

50 parts of this emulsion containing 50 wt.% solid is then blended with either a commercial emulsion of carboxylated latex Revinex 97D40® suppliewd by Doverstrand Limited (U.K.) Typical PSA properties are after film drying:

| Ester/Revinex ratio wt.% | | 50/50 | 50/100 |
|---|---|---|---|
| 180° Peel strength | (grams/cm) | 290 | 390 |
| Polyken tack | (grams) | 380 | 480 |
| Ball tack | (cm) | 5 | 4 |
| Shear | (hr) | 4.6 | 4.2 |

Example 26

Various polyCPD-maleic half esters prepared from different CPD oligomer distribution have been tested successfully in hot melt road marking formulations. The blends develop white (low yellowness index) non tacky strips which are exhibiting good solvent resistance and the products can be used as such or as in blends with conventional hydrocarbon resins. Acid number can vary from 0.5 to 180 depending on blending ratio and half ester manufacturing conditions. The products were compared with blends containing Escorez® 1102, Quintone® C200 and maleic fortified rosin (F.R.).

The basic formulation used in this example is based on the following blend:

79 wt.% aggregate ($TiO_2$, $CaCo_3$, sand, glass beads)
17 wt.% resin (half esters or competitive products)
4 wt.% cotton seed oil.

| Comparative products | | | | Quintone (Registered Trade Mark) C200 | Escorez (Registered Trade Mark) 1102 | F.R. |
|---|---|---|---|---|---|---|
| Half Esters | | | | | | |
| Softening point | 91 | 115 | 120 | | | |
| Acid number (mg KOH/grams) | 54 | 134 | 42 | | | |
| Gardner colour | 1 | 4 | 2 | | | |
| Formulations | | | | | | |
| Yellowness index | 0.049 | 0.059 | 0.061 | 0.093 | 0.092 | 0.090 |
| Whiteness | 0.086 | 0.085 | 0.084 | 0.087 | 0.087 | 0.086 |

As shown in Examples 23 and 25 polyCPD-maleate esters contain a reactive double bond which can be polymerised with unsaturated monomers either in the presence of heat or free radical catalyst.

It is anticipated that those products can also be polymerised, copolymerised, crosslinked in presence of vinyl or unsaturated monomers, unsaturated elastomers or polymers (Thermoplastic rubbers such as Cariflex (Registered Trade Mark) TR 1102, TR 1107, polyisoprene elastomers, polydienic resins, unsaturated polyesters, diallyl phthalates . . .) in presence of for example U.V. curing, gamma radiation and electron beam curing.

Those curings can be carried out in the presence of conventional U.V. photoinitiator/and optionally in the presence of polyfunctional monomers such as divinyl benzene, polyfunctional acrylates and methacrylates or any other suitable polyunsaturated monomers.

**Claims**

1. A process for the production of polar petroleum resins comprising reacting a cyclopentadiene oligomer mixture containing
(i) from 10 to 90% by weight of tricyclopentadiene
(ii) from 90% to 10% by weight of tetracyclopentadiene
(iii) from 0% to 50% by weight of pentacyclopentadiene
and less than 20% by weight of dicyclopentadiene with a carboxylic acid or anhydride, the percentages being of the total cyclodiene content in the mixture.

2. A process according to claim 1 in which the mixture contains from 30 to 70 wt.% of tricyclopentadiene and from 30 to 70 wt.% of tetracyclopentadiene.

3. The process according to claim 1 or claim 2 in which the pentacyclopentadiene content of the mixture is less than 30 wt.%.

4. A process according to any of the preceding claims in which the mixture of oligomers has a number average molecular weight of from 150 to 300.

5. A process according to claim 4 in which the mixture of oligomers has a number average molecular weight of from 190 to 250.

6. A process according to any of the preceding claims in which the carboxylic acid is an α,β unsaturated acid.

7. A process according to claim 6 in which the acid is maleic acid.

8. A process according to claim 5 or 6 in which the acid is reacted with the mixture of cyclopentadiene oligomers by combining a solution of the cyclopentadiene oligomers with the acid at the melting temperature of the acid.

9. A process according to any of the preceding claims in which between 0.2 and 2.0 moles of acid are reacted per mole of cyclopentadiene in the mixture.

10. A polar petroleum resin whenever prepared by a process according to any of the preceding claims.

11. The polar petroleum resin according to claim 10 which is a half ester and the carboxylic acid is a dicarboxylic acid.

12. The polar petroleum resin according to claim 10 or claim 11 which has been hydrogenated.

13. A process for the production of polyesters comprising reacting the half ester according to claim 11 or claim 12 with a polyol and an anhydride.

14. A process for the production of polyamides comprising reacting the half ester according to claim 11 or claim 12 with an amine, a diamine or urea.

15. A process for the production of polyurethanes comprising reacting the half ester according to claim 11 or claim 12 with a polyol and an organic isocyanate.

16. A process for the production of polyethers comprising reacting the half ester according to claim 11 or claim 12 with an epoxide.

17. A process for the production of esters comprising reacting the half ester according to claim 11 or claim 12 with a monoalcohol or polyhydric alcohol.

18. A process according to claim 17 in which the alcohol is a long chain aliphatic alcohol.

19. A process according to claim 17 in which the alcohol is a cyclic alcohol.

20. A process according to claim 19 in which the alcohol is cyclohexanol.

21. A process according to any of claims 17 to 20 in which from 0.2 to 2.0 moles of an α,β unsaturated acid are reacted per mole of cyclopentadiene in the mixture and the product is reacted with from 0.2 to 3.0 moles of an alcohol.

22. An esterified resin whenever produced by a process according to any of claims 17 to 21.

23. The product of claim 22 whenever hydrogenated.

24. The use of an esterified resin according to claim 22 or claim 23 as a tackifier for natural or synthetic rubbers in adhesive formulations.

25. The use of an esterified resin according to claim 22 or claim 23 as a tackifier in hot melt adhesives.

26. A hot melt adhesive containing 30 to 200 parts by weight of an esterified resin according to claim 22 or claim 23 and 40 to 120 parts of an ethylene vinyl acetate copolymer.

27. The use of an esterified resin according to claim 22 or claim 23 as a binder in a hot melt road marking formulation.

28. A hot melt road marking formulation containing 25 to 300 parts by weight of pigment for every part of an esterified resin according to claim 22 or claim 23.

29. A hot melt road marking formulation according to claim 28 in which the pigment is Titanium Dioxide.

**Patentansprüche**

1. Verfahren zur Herstellung von polaren Petrolharzen, dadurch gekennzeichnet, daß eine Cyclopentadien-oligomerenmischung, die
(i) 10—90% Gew.% Tricyclopentadien
(ii) 90—10 Gew.% Tetracyclopentadien
(iii) 0—50 Gew.% Pentacyclopentadien
und weniger als 20 Gew.% Dicyclopentadien enthält, mit einer Caarbonsäure oder einem Carbonsäureanhydrid zur Reaktion gebracht wird, wobei die Prozentangaben auf den Gesamtcyclodiengehalt in der Mischung bezogen sind.

2. Verfahren nach Anspruch 1, dadurch gekennzeichnet, daß die Mischung 30 bis 70 Gew.% Tricyclopentadien und 30 bis 70 Gew.% Tetracyclopentadien enthält.

3. Verfahren nach Anspruch 1 oder Anspruch 2, dadurch gekennzeichnet, daß der Pentacyclopentadiengehalt der Mischung kleiner als 30 Gew.% ist.

4. Verfahren nach einem der vorangehenden Ansprüche, dadurch gekennzeichnet, daß die Mischung der Oligomeren ein Durchschnittsmolekulargewicht von 150 bis 300 aufweist.

5. Verfahren nach Anspruch 4, dadurch gekennzeichnet, daß die Mischung der Oligomeren ein durchschnittliches Molekulargewicht von 190 bis 250 aufweist.

6. Verfahren nach einem der vorangehenden Ansprüche, dadurch gekennzeichnet, daß die Carbonsäure eine alpha,beta-ungesättigte Säure ist.

7. Verfahren nach Anspruch 6, dadurch gekennzeichnet, daß die Säure Maleinsäure ist.

8. Verfahren nach Anspruch 5 oder 6, dadurch gekennzeichnet, daß die Säure mit der Mischung der Cyclopentadienoligomeren zur Reaktion gebracht wird, indem eine Lösung der Cyclopentadienoligomeren mit der Säure bei der Schmelztemperatur der Säure vermischt wird.

9. Verfahren nach einem der vorangehenden Ansprüche, dadurch gekennzeichnet, daß 0,2 bis 2,0 Mol Säure pro Mol Cyclopentadien in der Mischung zur Reaktion gebracht werden.

10. Polares Petrolharz hergestellt nach einem Verfahren gemäß einem der vorangehenden Ansprüche.

11. Polares Petrolharz nach Anspruch 10, dadurch gekennzeichnet, daß es ein Halbester und die Carbonsäure eine Dicarbonsäure ist.

12. Polares Petrolharz nach Anspruch 10 oder 11, dadurch gekennzeichnet, daß es hydriert worden ist.

13. Verfahren zur Herstellung von Polyestern, dadurch gekennzeichnet, daß der Halbester gemäß Anspruch 11 oder Anspruch 12 mit einem Polyol und einem Anhydrid zur Reaktion gebracht wird.

14. Verfahren zur Herstellung von Polyamiden, dadurch gekennzeichnet, daß der Halbester gemäß Anspruch 11 oder Anspruch 12 mit einem Amin, einem Diamin oder Harnstoff zur Reaktion gebracht wird.

15. Verfahren zur Herstellung von Polyurethanen, dadurch gekennzeichnet, daß der Halbester gemäß Anspruch 11 oder Anspruch 12 mit einem Polyol und einem organischen Isocyanat zur Reaktion gebracht wird.

16. Verfahren zur Herstellung von Polyethern, dadurch gekennzeichnet, daß der Halbester gemäß Anspruch 11 oder Anspruch 12 mit einem Epoxid zur Reaktion gebracht wird.

17. Verfahren zur Herstellung von Estern, dadurch gekennzeichnet, daß der Halbester gemäß Anspruch 11 oder Anspruch 12 mit einem Monoalkohol oder einem Polyalkohol zur Reaktion gebracht wird.

18. Verfahren nach Anspruch 17, dadurch gekennzeichnet, daß der Alkohol ein langkettiger aliphatischer Alkohol ist.

19. Verfahren nach Anspruch 17, dadurch gekennzeichnet, daß der Alkohol ein cyclischer Alkohol ist.

20. Verfahren nach Anspruch 19, dadurch gekennzeichnet, daß der Alkohol Cyclohexanol ist.

21. Verfahren nach einem der Ansprüche 17 bis 20, dadurch gekennzeichnet, daß 0,2 bis 2,0 Mol einer alpha,beta-ungesättigten Säure pro Mol Cyclopentadien in der Mischung zur Reaktion gebracht werden und das Produkt mit 0,2 bis 3,0 Mol eines Alkohols zur Reaktion gebracht wird.

22. Verestertes Harz, hergestellt nach einem Verfahren gemäß einem der Ansprüche 17 bis 21.

23. Produkt nach Anspruch 22, dadurch gekennzeichnet, daß es hydriert ist.

24. Verwendung eines veresterten Harzes gemäß Anspruch 22 oder Anspruch 23 als Klebrigmacher für natürliche — oder synthetische Kautschuke in Klebstoffformulierungen.

25. Verwendung eines veresterten Harzes gemäß Anspruch 22 oder Anspruch 23 als Klebrigmacher in Schmelzklebern.

26. Schmelzkleber, welcher 30 bis 200 Gewichtsteile verestertes Harz gemäß Anspruch 22 oder Anspruch 23 und 40 bis 120 Teile Ethylen-Vinylacetat-Copolymer enthält.

27. Verwendung eines veresterten Harzes gemäß Anspruch 22 oder Anspruch 23 als Bindemittel in einer Schmelz-Straßenmarkierungsformulierung.

28. Schmelz-Straßenmarkierungsformulierung, welche 25 bis 300 Gewichtsteile Pigment für jedes Teil eines veresterten Harzes gemäß Anspruch 22 oder Anspruch 23 enthält.

29. Schmelz-Straßenmarkierungsformulierung nach Anspruch 28, dadurch gekennzeichnet, daß das Pigment Titandioxid ist.

**Revendications**

1. Procédé de production de résines de pétrole polaires, consistant à faire réagir un mélange d'oligomères cyclopentadiéniques contenant
(i) 10 à 90% en poids de tricyclopentadiène
(ii) 90% à 10% en poids de tétracyclopentadiène
(iii) 0% à 50% en poids de pentacylopentadiène
et moins de 20% en poids de dicyclopentadiène, avec un acide ou anhydride carboxylique, les pourcentages étant exprimés sur la base de la teneur totale en cyclodiènes dans le mélange.

2. Procédé suivant la revendication 1, dans lequel le mélange contient 30 à 70% en poids de tricyclopentadiène et 30 à 70% en poids de tétracyclopentadiène.

3. Procédé suivant la revendication 1 ou la revendication 2, dans lequel la teneur en pentacyclopentadiène du mélange est inférieure à 30% en poids.

4. Procédé suivant l'une quelconque des revendications précédentes, dans lequel le mélange d'oligomères possède une moyenne en nombre du poids moléculaire comprise dans l'intervalle de 150 à 300.

5. Procédé suivant la revendication 4, dans lequel le mélange d'oligomères possède une moyenne en nombre du poids moléculaire comprise dans l'intervalle de 190 à 250.

6. Procédé suivant l'un quelconque des revendications précédentes, dans lequel l'acide carboxylique est un acide à insaturation α,β.

7. Procédé suivant la revendication 6, dans lequel l'acide est l'acide maléique.

8. Procédé suivant la revendication 5 ou 6, dans lequel on fait réagir l'acide avec le mélange d'oligomères cyclopentadiéniques en mélangeant une solution des oligomères cyclopentadiéniques à l'acide à la température de fusion de l'acide.

9. Procédé suivant l'une quelconque des revendications précédentes, dans lequel on fait réagir 0,2 à 2,0 moles d'acide par mole de cyclopentadiène dans le mélange.

10. Résine de pétrole polaire, préparée par un procédé suivant l'une quelconque des revendications précédentes.

11. Résine de pétrole polaire suivant la revendication 10, qui est un hémi-ester, l'acide carboxylique étant un acide dicarboxylique.

12. Résine de pétrole polaire suivant la revendication 10 ou la revendication 11, qui a été hydrogénée.

13. Procédé de production de polyesters consistant à faire réagir l'hémi-ester suivant la revendication 11 ou la revendication 12 avec un polyol et un anhydride.

14. Procédé de production de polyamides, consistant à faire réagir l'hémi-ester suivant la revendication 11 ou la revendication 12 avec une amine, une diamine ou l'urée.

15. Procédé de production de polyuréthannes, consistant à faire réagir l'hémi-ester suivant la revendication 11 ou la revendication 12 avec un polyol et un isocyanate organique.

16. Procédé de production de polyéthers, consistant à faire réagir l'hémi-ester suivant la revendication 11 ou la revendication 12 avec un époxyde.

17. Procédé de production d'esters, consistant à faire réagir l'hémi-ester suivant la revendication 11 ou la revendication 12, avec un mono-alcool ou un alcool polyhydroxylique.

18. Procédé suivant la revendication 17, dans lequel l'alcool est un alcool aliphatique à chaîne longue.

19. Procédé suivant la revendication 17, dans lequel l'alcool est un alcool cyclique.

20. Procédé suivant la revendication 19, dans lequel l'alcool est le cyclohexanol.

21. Procédé suivant l'une quelconque des revendications 17 à 20, dans lequel on fait réagir 0,2 à 2,0 moles d'un acide à insaturation α,β par mole de cyclopentadiène dans le mélange et on fait réagir le produit avec 0,2 à 3,0 moles d'un alcool.

22. Résine estérifiée produite par un procédé suivant l'une quelconque des revendications 17 à 21.

23. Procédé suivant la revendication 22, sous une forme hydrogénée.

24. Utilisation d'une résine estérifiée suivant la revendication 22 ou la revendication 23 comme agent d'adhésivité pour les caoutchoucs naturels ou synthétiques dans des formulations d'adhésifs.

25. Utilisation d'une résine estérifiée suivant la revendication 22 ou la revendication 23 comme agent d'adhésivité dans des adhésifs thermofusibles.

26. Adhésif thermofusible contenant 30 à 200 parties en poids d'une résine estérifiée suivant la revendication 22 ou la revendication 23 et 40 à 120 parties d'un copolymère éthylène-acétate de vinyle.

27. Utilisation d'une résine estérifiée suivant la revendication 22 ou la revendication 23 comme liant dans une formulation thermofusible destinée au marquage des routes.

28. Formulation thermofusible destinée au marquage des routes, contenant 25 à 300 parties en poids de pigment pour chaque partie d'une résine estérifiée suivant la revendication 22 ou la revendication 23.

29. Formulation thermofusible destinée au marquage des routes suivant la revendication 28, dans laquelle le pigment est le dioxyde de titane.